Europäisches Patentamt

European Patent Office

Office européen des brevets

(11) Publication number: **0 406 853 B1**

# EUROPEAN PATENT SPECIFICATION

(45) Date of publication of patent specification: **20.12.95**   (51) Int. Cl.⁶: **C01B 31/02**, C10M 171/00

(21) Application number: **90112844.7**

(22) Date of filing: **05.07.90**

The file contains technical information submitted after the application was filed and not included in this specification

(54) **A carbonaceous powder for electrorheological fluid and a method of making the same**

(30) Priority: **06.07.89 JP 172982/89**
     **26.02.90 JP 42406/89**
     **26.02.90 JP 42407/89**
     **26.02.90 JP 42408/89**
     **26.02.90 JP 42409/89**

(43) Date of publication of application:
     **09.01.91 Bulletin 91/02**

(45) Publication of the grant of the patent:
     **20.12.95 Bulletin 95/51**

(84) Designated Contracting States:
     **DE FR GB IT SE**

(56) References cited:
     **EP-A- 0 156 051**
     **EP-A- 0 361 106**
     **US-A- 2 417 850**

(73) Proprietor: **KAWASAKI STEEL CORPORATION**
     **1-28, Kitahonmachi-dori 1-Chome**
     **Chuo-Ku, Kobe-Shi**
     **Hyogo-Ken (JP)**

Proprietor: **Bridgestone Corporation**
     **1-1, Kyobashi 1-Chome**
     **Chuo-Ku**

**Tokyo 104 (JP)**

(72) Inventor: **Fukuda, Noriyoshi, C/o Technical Research Division**
     **Kawasaki Steel Corporation**
     **1 Kawasakicho,**
     **Chiba prefecture (JP)**
Inventor: **Nagayama, Katsuhiro, C/o Technical Research Div.**
     **Kawasaki Steel Corporation**
     **1 Kawasakicho,**
     **Chiba prefecture (JP)**
Inventor: **Torii, Takayuki, C/o Technical Research Division**
     **Kawasaki Steel Corporation**
     **1 Kawasakicho,**
     **Chiba prefecture (JP)**
Inventor: **Hatano, Hitomi, C/o Technical Research Division**
     **Kawasaki Steel Corporation**
     **1 Kawasakicho,**
     **Chiba prefecture (JP)**

Inventor: **Ishino, Yuichi, C/o Research and Development Lab.**
**Bridgestone Co.,**
**1-1 Ogawahigashicho 3-chome**
**Kodaira City,**
**Tokyo (JP)**
Inventor: **Maruyama, Takayuki C/o Research and Dev. Lab.**
**Bridgestone Co.,**
**1-1 Ogawahigashicho 3-chome**
**Kodaira City,**
**Tokyo (JP)**
Inventor: **Saito, Tasuku C/o Research and Development Lab.**
**Bridgestone Co.,**
**1-1 Ogawahigashicho 3-chome**
**Kodaira City,**
**Tokyo (JP)**

(74) Representative: **Reinhard - Skuhra - Weise & Partner**
**Postfach 44 01 51**
**D-80750 München (DE)**

2

## Description

FIELD OF THE INVENTION

The present invention relates to a carbonaceous powder for electrorheological fluids. Carbonaceous powder can be employed as dielectric fine-particles to be dispersed in an oily medium superior in electric insulation to form an electrorheological fluid showing superior electrorheological effect with smaller value of electric current and having excellent thermal stability.

DESCRIPTION OF THE PRIOR ART

Electrorheological fluids display swift and reversible change in apparent viscosity under application of an electric potential difference to the fluid, and is composed generally of electrical insulating oily medium and dielectric fine-particles dispersed therein.

The characteristics of electrorheological fluids have been known for many years, and applications for system components to control electrically such apparatus or parts as clutches, valves, shock-absorbers, various vibration-insulating rubber, actuators, robot arms and dampers have been studied.

Heretofore, dielectric fine-particles used as the dispersoid for the electrorheological fluids were: pulverized cellulose, starch, silica gel, ion exchange resins, etc. which have absorbed water on the surface. Known as the liquid phase component are such highly electrical insulating oily media as PCB (polychlorobenzene), butylsebacate, spindle oils, transformer oils, chlorinated paraffins and silicone oils.

These electrorheological fluids are disclosed, for example, in U.S. Patent No.2,886,151 and No.3,047,507, Japanese Patent Provisional Publication Tokkaisho No.53-17585 (1978), No.53-93186 (1978), No.57-47234 (1982), No.61-44998 (1986), No.61-259752 (1986), No.62-95397 (1987) and Tokkaihei No.1-207395 (1989).

On the other hand, there are proposals for improvements in electrorheological fluids, in which are disclosed, for example, a method of coating the surface of fine-particles with various polymers for the purpose of improving the stability for a long term usage and thermal characteristics due to the employment of fine-particles having water absorbed on the surface [Japanese Patent Provisional Publication Tokkaisho No.47-17674 (1972) and No.63-97694 (1988)].

EP 0 156 051 discloses a method for producing carbon powders having a benzene-insoluble component content of not lower than 95% by weight, a quinoline-insoluble component content of not less than 80% by weight and volatile matter content of 4-15% by weight. Such carbon powders can be used as a raw material for the production of various isotropic carbon articles with various electric resistivities. This document does not mention the combination between a number ratio of carbon atoms to hydrogen atoms of 1.70 - 3.50 and a weight loss of 0.5 - 13.0% in the temperature range of from 400°C to 600°C when measured with a thermal gravimetric analyser during heating of the carbonaceous powder under nitrogen atmosphere from room temperature at a temperature raise of 10°C/minute. Furthermore, the use of the carbon powders for electrorheological fluids is not described.

However, electrorheological fluids developed so far are not stable in their capability against a long term usage and thermal characteristics owing to water absorbed on the surface of fine-particles, and are scarcely usable practically. Accordingly, electrorheological fluids having practical merits, high performances and stabilities have not been found.

The mechanism of exibiting the electrorheological effect has not been clarified fully. However, it is believed generally that the viscosity of the electrorheological fluid increases as a result of mutual bonding and bridging of particles therein due to mutual electrostatic attraction of polarized particles resulted from polarization of dielectric fine-particles by an electric potential difference applied thereto from the outside.

In consideration of the above, the present inventors have thought that a carbonaceous powder containing such elements other than carbon as hydrogen and oxygen and retaining functional groups appropriately can exhibit excellent characteristics as dielectric fine-particles for electrorheological fluid, that the powder can solve problems in electrorheological fluids concerning the instability against a long term usage and thermal instability of characteristics due to the employment of fine-particles having absorbed water on the surface, and that the powder can contribute remarkably to practical application of electrorheological fluid.

However, since the application of carbonaceous powder to electrorheological fluid has only been studied about employment of carbon black, etc. with little research results, carbonaceous powder with excellent characteristics applicable practically has not been developed.

## SUMMARY OF THE INVENTION

It is an object of the present invention to provide a carbonaceous powder for electrorheological fluid which can be employed as dielectric fine-particles to be dispersed in an oily medium to form electrorheological fluids which are free from such problems of conventional electrorheological fluids as instability against a long term usage and thermal instability of characteristics, and are capable of exhibiting excellent electrorheological effect.

It is a further object of the present invention to provide a method of making the carbonaceous powder for electrorheological fluid.

The present inventors have conducted extensive research on relationship between characteristics of carbonaceous powder and the electrorheological effect, and have invented a carbonaceous powder employable for electrorheological fluids superior in stability against a long term usage and thermal stability, as well as a method of making thereof.

The carbonaceous powder for electrorheological fluid of the present invention comprises a carbonaceous powder having a number ratio of carbon atoms to hydrogen atoms (C/H) of 1.70-3.50 and 0.5-13.0% weight loss in a temperature range of 400°C to 600°C when measured with a thermal gravimetric analyzer during heating the carbonaceous powder under nitrogen atmosphere from room temperature at a temperature rise of 10°C/minute.

## BRIEF DESCRIPTION OF THE DRAWINGS

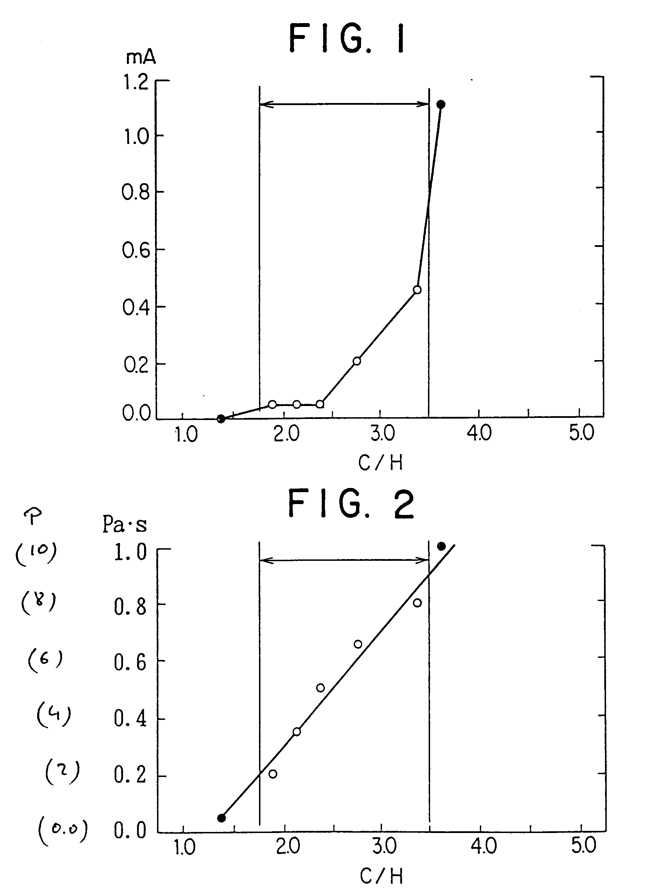

Fig.1 is a graph showing relationship between the C/H ratios of the carbonaceous powder of Examples 2 and 3 and the values of electric current (mA) through the electrorheological fluids using the carbonaceous powder under application of 2kV/mm electric potential difference; and Fig.2 is a graph showing relationship between the C/H ratios of carbonaceous powder of Examples 2 and 3 and the increase in viscosity Pa•s (poise) of the electrorheological fluids using the carbonaceous powder under application of 2kV/mm electric potential difference.

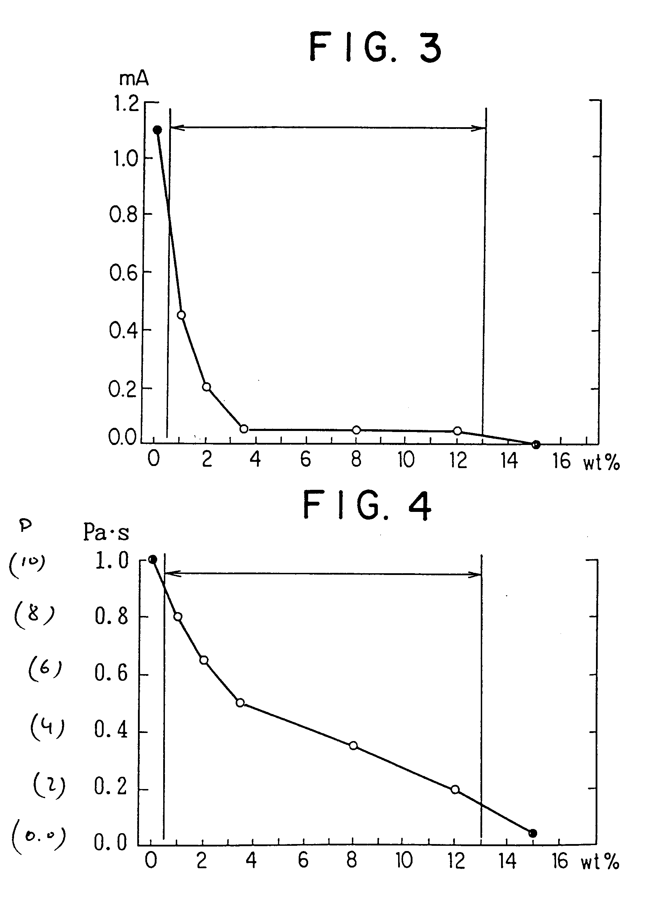

Fig.3 is a graph showing relationship between the weight loss (wt%) in a temperature range of 400°C to 600°C measured with TGA during heating the carbonaceous powder of Examples 2 and 3 under nitrogen atmosphere from room temperature and the values of electric current (mA) through the electrorheological fluids using the carbonaceous powder under application of 2kV/mm electric potential difference; and Fig.4 is a graph showing relationship between the weight loss (wt%) in a temperature range of 400°C to 600°C measured with TGA during heating the carbonaceous powder of Examples 2 and 3 under nitrogen atmosphere from room temperature and the increase in viscosity Pa•s (poise) of the electrorheological fluids using the carbonaceous powder under application of 2kV/mm electric potential difference.

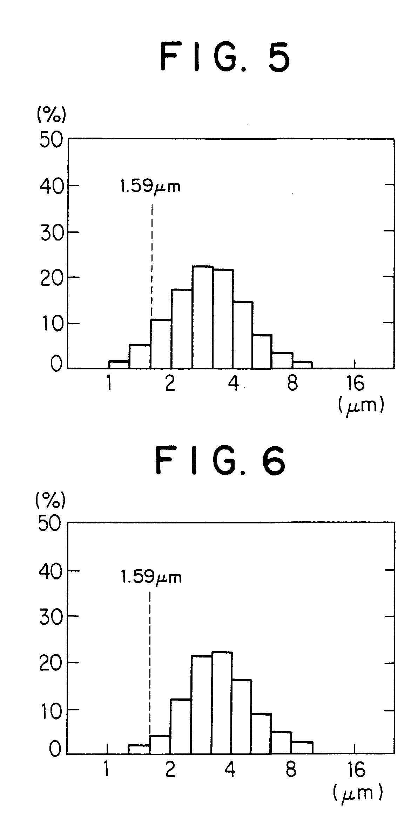

Fig.5 is a graph showing particle size distribution of the carbonaceous powder of Example 4; and Fig.6 is a graph showing particle size distribution of the carbonaceous powder of Example 5.

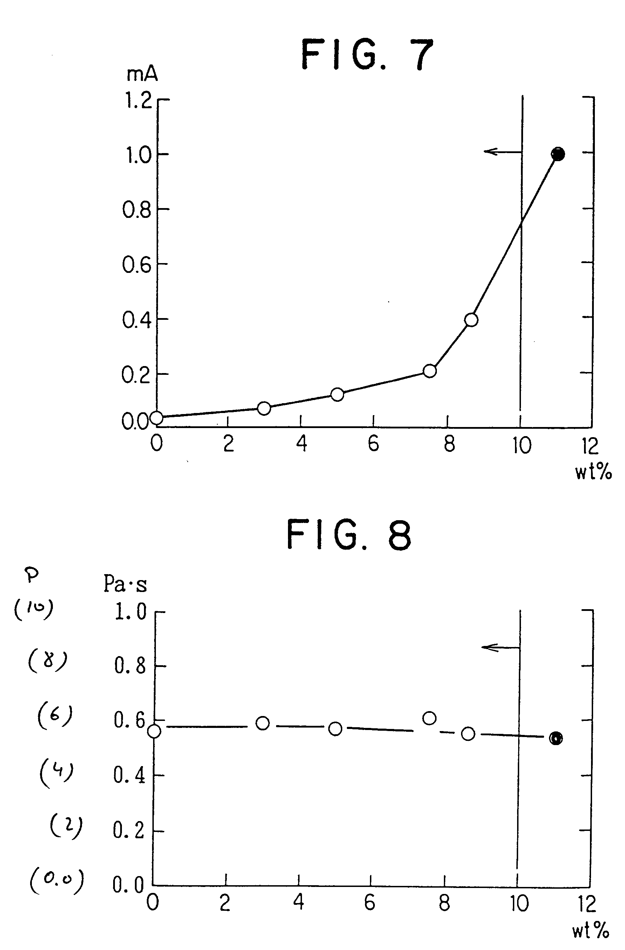

Fig.7 is a graph showing relationship between the oxygen content of carbonaceous powder of Example 6 and the values of electric current (mA) through the electrorheological fluids using the carbonaceous powder under application of 2kV/mm electric potential difference; and Fig.8 shows relationship between oxygen content of carbonaceous powder of Example 6 and increase in viscosity Pa•s (poise) of the electrorheological fluids using the carbonaceous powder under application of 2kV/mm electric potential difference.

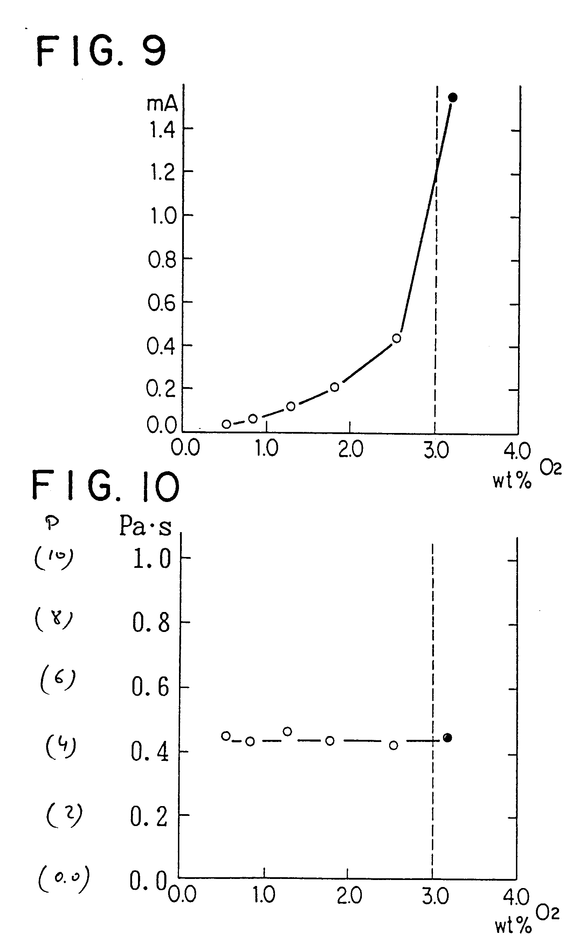

Fig.9 is a graph showing relationship between the free-carbon content of carbonaceous powder of Example 11 and the value of electric current (mA) through the electrorheological fluids using the carbonaceous powder under application of 2kV/mm electric potential difference; and Fig.10 is a graph showing relationship between free-carbon content of carbonaceous powder of Example 11 and increase in viscosity of the electrorheological fluids using the carbonaceous powder.

## DETAILED DESCRIPTION OF THE PREFERRED EMBODIMENTS

The carbonaceous powder for electrorheological fluid which can be employed as dielectric fine-particles to be dispersed in an oily medium superior in electric insulation comprises a carbonaceous powder having a number ratio of carbon atoms to hydrogen atoms (C/H) of 1.70-3.50; and 0.5-13.0% weight loss in a temperature range of 400°C to 600°C when measured with a thermal gravimetric analyzer during heating the carbonaceous powder under nitrogen atmosphere from room temperature at a temperature rise of 10°C/minute.

General characteristics requested for electrorheological fluids are that, in addition to exhibiting a marked increase in viscosity under an influence of electric potential difference applied thereto with a small electric current consumption, fine-particles do not precipitate in the oily medium, being stable against a long term usage and temperature changes, and superior in responding to the electric potential difference applied thereto.

As the result of careful studies on carbonaceous powder for electrorheological fluids satisfying these requested characteristics, it has been found to be important that the number ratio of carbon atoms to hydrogen atoms (C/H) based on elemental analysis is 1.70-3.50, preferably 2.00-3.50, and more preferably 2.20-3.00.

When a carbonaceous powder has the C/H ratio of below 1.70, the powder is not able to exhibit fully the capability to be the dielectric dispersoid suitable for electrorheological fluid and satisfactory electrorheological effect cannot be attained.

On the other hand, when the C/H ratio is above 3.50, value of electric current which flows through the electrorheological fluid becomes excessive and energy efficiency is practically lowered.

The C/H ratio seems to have a relationship with number of surface and/or inside functional groups of the carbonaceous powder, and the number of surface and/or inside functional groups reduces when the C/H ratio increases. Accordingly, regulating of the C/H ratio of a carbonaceous powder is regarded as regulating the number of surface and/or inside functional groups or polarity of the carbonaceous powder.

On the other hand, the C/H ratio relates to crystallinity (degree of graphitization) of a carbonaceous material itself, and an increase in the C/H ratio means an increase in crystallinity of the carbonaceous material itself. Therefore, smaller C/H ratio cannot provide dielectric fine-particles with capabilities suitable for electrorheological fluid, and larger C/H ratio causes an increased value of electric current together with an increase in viscosity when an electric potential difference field is applied, due to superior crystallinity of the carbonaceous material itself.

Further in addition to the C/H ratio, according to studies by the present inventors, it has been found that the amount of weight loss in a temperature range of 400°C to 600°C when measured with a thermal gravimetric analyzer during heating the carbonaceous powder under nitrogen atmosphere from room temperature at a temperature rise of 10°C/minute relates to its capabilities as dielectric fine-particles for electrorheological fluid. That is, the carbonaceous powder having an amount of weight loss in a temperature range of 400°C to 600°C when measured with a thermal gravimetric analyzer during heating the carbonaceous powder under nitrogen atmosphere from room temperature at a temperature rise of 10°C/minute of 0.5-13.0% by weight, preferably of 0.5-6.0% by weight, can exhibit superior capabilities as dielectric fine-particles for electrorheological fluids.

When the amount of weight loss in a temperature range of 400°C to 600°C exceeds 13.0% by weight, the carbonaceous powder cannot exhibit fully capabilities as dielectric fine-particles and so sufficient electrorheological effect is unattainable. When the amount of weight loss in a temperature range of 400°C to 600°C is below 0.5% by weight, a too high value of electric current flows through the electrorheological fluid to cause practical lowering of energy efficiency.

The amount of weight loss in a temperature range of 400°C to 600°C during heating the carbonaceous powder under nitrogen atmosphere from room temperature is measured with a thermal gravimetric analyzer (TGA). In the present invention, the amount of weight loss indicates an amount of weight loss obtained in a temperature range of 400°C to 600°C during heating the carbonaceous powder by raising temperature continuously at a heating rate of 10°C per minute under nitrogen flow from room temperature.

The amount of weight loss in a temperature range of 400°C to 600°C when measured with a thermal gravimetric analyzer during heating the carbonaceous powder under nitrogen atmosphere from room temperature at a temperature rise of 10°C/minute seems to relate to amount of low molecular weight components unrelated with crystallization at the surface and/or inside of the carbonaceous powder. The amount of low molecular weight components may be smaller when the amount of weight loss in a temperature range of 400°C to 600°C during heating the carbonaceous powder under nitrogen atmosphere from room temperature is smaller. Accordingly, regulating of the amount of weight loss in a temperature range of 400°C to 600°C during heating the carbonaceous powder under nitrogen atmosphere from room temperature is regarded as regulating of the amount of low molecular weight components unrelated with crystallinity or regulating of polarity of the carbonaceous powder.

The amount of weight loss in a temperature range of 400°C to 600°C during heating the carbonaceous powder under nitrogen atmosphere from room temperature have generally relationship with the C/H ratio, and when final treating temperature of the carbonaceous powder is settled at higher level, the amount of weight loss decreases and the C/H ratio increases. Accordingly, in order to obtain a carbonaceous powder suitable as dielectric fine-particles for electrorheological fluids, it is necessary to settle the final treating temperature so as both the amount of weight loss in a temperature range of 400°C to 600°C during heating the carbonaceous powder under nitrogen atmosphere from room temperature and the C/H ratio to become the most appropriate ones.

Studies on dielectric fine-particles for electrorheological fluids and development of carbonaceous powder satisfying thereof have heretofore never been conducted from the above-mentioned standpoints, and so the present invention is recognized as so significant.

For other favorable characteristics of the carbonaceous powder to maintain the stability of the electrorheological fluid at high temperatures and at a long term usage, low boiling components in the carbonaceous powder are preferably removed as much as possible. An amount of weight loss measured with a thermal gravimetric analyzer (TGA) during heating from room temperature to 200°C at a raising rate of 10°C per minute under nitrogen atmosphere of less than 0.5% by weight, preferably of less than 0.3% by weight, is desirable.

Since the low-boiling components evaporate during repeated usages and under high-temperature usages, they are considered to hinder the stability under a long term usage and thermal stability of the electrorheological fluid.

Particle size of the carbonaceous powder having the number ratio of carbon atoms to hydrogen atoms (C/H) of 1.70-3.50 and the amount of weight loss in a temperature range of 400°C to 600°C during heating the carbonaceous powder under nitrogen atmosphere from room temperature of 0.5-13.0% by weight are preferred to have maximum particle size of not larger than 50$\mu$m. Further, average particle size of the powder is recommendable to be 0.5-40$\mu$m, preferably 2-40$\mu$m, more preferably 2-10$\mu$m in addition to the maximum particle size of not larger than 50$\mu$m. Particle sizes mentioned above are measured with Coulter Counter.

When the maximum particle size exceeds 50$\mu$m or the average particle size exceeds 40$\mu$m, particles usually tend to precipitate in an oily medium, though the precipitation depends on the oily medium employed. When particles smaller than 0.5$\mu$m in average size are employed for electrorheological fluid, the fluid shows a markedly high initial viscosity under no application of electric potential difference, and exhibits small increase in viscosity due to the electrorheological effect.

Especially, when the carbonaceous powder contains ultrafine particles, the electrorheological fluid obtained has a remarkably increased fluid viscosity under no application of electric potential difference to result in a small increase in viscosity due to the electrorheological effect. Practically, when ultrafine particles not larger than 1.59$\mu$m in particle size are contained more than 5% by weight, a bad effect appears so greatly that it is preferred to reduce the amount of ultrafine particles not larger than 1.59$\mu$m in particle size below 5% by weight. They can be removed by classification or by other methods, if necessary.

By regulating the particle size, it is possible to obtain more stable carbonaceous powder superior in their characteristics.

As a result of further study by the inventors, it has been found that the carbonaceous powder containing practically no free-carbon, which is obtainable by removing free-carbon contained originally in coal-tar pitch generally used as a raw material for the carbonaceous powder, can suppress the value of electric current which flows through the electrorheological fluid employing the carbonaceous powder under application of an electric potential difference and decrease consumption of electric power effectively.

That is, the carbonaceous powder containing practically no free-carbon is preferred for the present invention.

The amount of free-carbon contained in the carbonaceous powder is preferably below 10% by weight, more preferably below 5% by weight. An electrorheological fluid employing the carbonaceous powder containing more than 10% by weight of free-carbon is not preferable, since an excessive electric current tends to flow in the electrorheological fluid and results in a lowered energy efficiency in use.

Free-carbon contained in tar, pitch, etc. is an extremely carbonized amorphous fine carbon particle produced by a vapor-phase thermal decomposition at above 1000°C of tar generated in a coke oven. Usually, the free-carbon is in the form of optically isotropic ultrafine carbonaceous particles of smaller than 2$\mu$m in average particle size, and is characterized in tar as QI (quinoline insoluble). Therefore, when the free-carbon with an increased degree of carbonization is contained in the carbonaceous powder for electrorheological fluid, the free-carbon brings about heterogeneity in the powder and reduces electric resistance of the powder to result in an excessive value of electric current which flows through the electrorheological fluid employing the carbonaceous powder, and expected electrorheological effect is not attainable.

As a method for regulating the amount of free-carbon in the carbonaceous powder, it is effective to prepare the carbonaceous powder for electrorheological fluid by the use as raw materials of tar and/or pitch with regulated content of free-carbon. Content of free-carbon in tar or pitch used as the raw material of the carbonaceous powder for electrorheological fluid is preferably the amount specified by the following formula:

$$\text{Free-carbon in tar or pitch (wt.\%)} \leq 10 \times \frac{\text{Yield of carbonaceous powder for electrorheological fluid from tar or pitch (wt.\%)}}{100}$$

In case of using carbonaceous powder prepared from tar and or pitch containing much free-carbon, it is preferred to remove free-carbon from the raw materials.

As to methods for removing free-carbon from tar or pitch, such usual industrially practiced methods as separation by centrifugation or settling under addition of solvents are applicable.

Further, as to methods for regulating the amount of free-carbon in the carbonaceous powder, a classification step of separating and regulating particles smaller than $2\mu$m is effectively used during the production step, under the consideration that free-carbon is originally ultrafine carbonaceous particles of smaller than $2\mu$m in particle size. As to methods for classification, such usually practiced ones as sieving, pneumatic-classification, wet or dry sedimentation and centrifugal separation are applicable.

Oxygen content in the carbonaceous powder is preferred to be not more than 3.0% by weight, preferably not more than 2.0% by weight. When oxygen content in a carbonaceous powder exceeds 3.0% by weight, an excessive value of electric current flows through the electrorheological fluid to cause decrease in the energy efficiency not to result in good electrorheological effect.

When the carbonaceous powder is employed as dielectric fine-particles for electrorheological fluid, it has been clarified by the present inventors that the degree of carbonization and the oxygen content of carbonaceous powder relates to electrorheological characteristics intimately. Namely, when a highly carbonized carbonaceous powder is employed, the change in viscosity under application of electric potential difference increases together with the increase in value of electric current which flows through the electrorheological fluid.

Further, it has been found that even when the degree of carbonization is the same, the increase in oxygen content in the carbonaceous powder brings about an increase in value of electric current which flows through the fluid, though increase in viscosity under application of electric potential difference is in the same level. The reason why the value of electric current increases accompanied with the increase in the oxygen content is not clear, however, it is reasoned that when the carbonaceous powder is employed as dielectric fine-particles for electrorheological fluids, carbon-oxygen bonds existing on the surface and inside of the carbonaceous powder cause directly or indirectly to flow the electric current more easily.

The carbonaceous powder having characteristics explained above displays an excellent electrorheological effect and has a long term stability and thermal stability which have never been obtainable. The powder is dispersed in such an electrical insulating oily medium employed usually for electrorheological fluids as spindle oil, transformer oil, chlorinated paraffins and silicone oil, and an excellent electrorheological fluid can be prepared. It is, of course, possible to incorporate to the fluid dispersing agents and highly dielectric liquids.

A methods for making the carbonaceous powder will be explained in detail hereunder.

As to the raw material, coal, coal tar, coal tar pitch, liquefied coal, coke, petroleum, petroleum tar, petroleum pitch and resins are usually used.

When free-carbon and/or ash is contained in the raw materials, it is preferable to remove them beforehand. Practically, such industrially practiced methods as pressurized filtration, centrifugal separation and settling-separation under addition of various solvents are applicable.

The raw material is heat-treated at final treating temperature of 300-800°C by a single use or combined uses of autoclaves, kilns, fluidized beds, electric furnaces, etc. so as to be regulated to have the expected values of the C/H ratio of 1.70-3.50, the amount of weight loss in a temperature range of 400°C to 600°C during heating the carbonaceous powder under nitrogen atmosphere from room temperature of 0.5-13.0% by weight and the weight loss during heating under nitrogen atmosphere from room temperature to 200°C of not more than 0.5% by weight.

The final treating temperature means the highest temperature in the step to regulate the amount of weight loss in a temperature range of 400°C to 600°C during heating the carbonaceous powder under nitrogen atmosphere from room temperature and the C/H ratio to become the most appropriate ones, and does not mean the treating temperature at the final step in the making of the carbonaceous powder of the present invention.

When the final treating temperature is below 300°C, the carbonization does not proceed sufficiently and the C/H ratio does not reach to 1.70, and components of low boiling below 200°C including water cannot be removed sufficiently. When the temperature is over 800°C, the carbonization progresses extremely and the C/H ratio exceeds 3.50.

If necessary, particle size is regulated to be the maximum particle size of below 50$\mu$m and average particle size of 0.5-40$\mu$m, preferably of 2-40$\mu$m, more preferably of 2-10$\mu$m, by carrying out pulverization and classification. During the classification, content of fine particles not larger than 1.59$\mu$m in particle size is preferably regulated at not mro than 5% by weight.

For the pulverization and classification, such industrially employed methods as jet mill, ball mill, pneumatic classification, sieving, centrifugation, sedimentation-separation, etc. are applicable. The particle size regulating step by the use of pulverization and classification may be conducted before and/or after the heat treatment step.

In order to attain the required electrorheological characteristics, it is necessary that the C/H ratio of the carbonaceous powder is uniformly regulated within a narrow range, the amount of weight loss in a temperature range of 400°C to 600°C when measured with a thermal gravimetric analyzer during heating the carbonaceous powder under nitrogen atmosphere from room temperature at a temperature rise of 10°C/minute remains within the above-mentioned range and the components of low boiling below 200°C including water are to be removed as much as possible. The low boiling point substances in the carbonaceous powder can be regulated by selecting conditions of the heat-treatment or the solvent extraction, or by adding newly such steps as drying.

In the heat treatment step, the raw material transforms from a liquid state to a solid state in accordance with the progress of carbonization. By the sticking of the raw material to apparatus or fusion of particles due to the melting, heat supply becomes uneven and the obtained carbonaceous powder becomes inhomogeneous. Accordingly, for obtaining a carbonaceous powder having a homogeneous C/H ratio, it is necessary during the heat treatment step to prevent the melting and sticking, keep fluidized state for a long term and control the heat to be supplied uniformly to the entire material.

In order to solve these problems, the heat treatment step is conducted in several steps. By employing an apparatus suitable for materials under fluid state at the treating temperature, a more homogeneous, carbonaceous powder can be obtained and components of low boiling below 200°C can be removed effectively. For example, mention is made on that pitch or tar is heat-treated in an autoclave at temperatures below the final treating temperature to raise the melting point, pulverized to regulate the particle size and then finally heat-treated uniformly under fluidization of particles in a fluidized bed or a rotary kiln.

As to more effective methods, there are means of enhancing degree of carbonization together with converting to higher melting points by obtaining a residue of extraction-filtration with an organic solvent prior to the final heat treatment step, or of converting the raw material to higher melting point by an oxidizing treatment at a temperature lower than the final treating temperature. By these treatments, melting during the heat treatment step can be prevented, and the C/H ratio and the amount of weight loss in a temperature range of 400°C to 600°C during heating the carbonaceous powder under nitrogen atmosphere from room temperature are regulated uniformly and easily. The extraction and filtration with an organic solvent and the oxidizing treatment at a temperature lower than the final treating temperature may be conducted singularly or in combination.

As to more preferable ways, there is a method of heat. treating the raw material at a temperature lower than the final treating temperature under regulation of the C/H ratio to raise melting temperature, pulverize the raw material if necessary, extraction-filtration with organic solvents and/or oxidation-treatment at a temperature lower than the final treating temperature, and heat treating the residue at the final treating temperature to regulate strictly the C/H ratio and the amount of weight loss in a temperature range of 400°C to 600°C during heating the carbonaceous powder under nitrogen atmosphere from room temperature. By the method, melting during the heat treatment step can be prevented and a carbonaceous powder having a uniform C/H ratio, a proper amount of weight loss in a temperature range of 400°C to 600°C when measured with a thermal gravimetric analyzer during heating the carbonaceous powder under nitrogen atmosphere from room temperature and a temperature rise of 10°C/minute and less components of low boiling point below 200°C can be produced.

For the carbonaceous powder, the amount of weight loss measured with a thermal gravimetric analyzer during heating under nitrogen atmosphere up to 200°C is preferably to be less than 0.5% by weight, more preferably less than 0.3% by weight. In order to attain the characteristics efficiently, it is effective to heat-treat again, if necessary, the carbonaceous powder having regulated C/H ratio and amount of weight loss in

8

a temperature range of 400°C to 600°C when measured with a thermal gravimetric analyzer during heating the carbonaceous powder under nitrogen atmosphere from room temperature at a temperature rise of 10°C/minute, at a temperature above 200°C and below the final treating temperature.

When the regulation of particle size is not conducted before the final heat treatment, the carbonaceous powder obtained by the above-mentioned treatment is pulverized with a ball-mill, a jet-mill, etc. and classified with a sieve, a classifier, etc. to regulate particle size to be suitable for the electrorheological fluid. Usually, preferable particles have the maximum particle size of less than 50$\mu$m and the average particle size of 0.5-40$\mu$m, preferably of 2-40$\mu$m, more preferably of 2-10$\mu$m, in order to avoid sedimentation in oily medium and maintain stable dispersion. For stabilization of electrorheological characteristics, narrower particle size distribution is preferred. The pulverization and classification prior to the heat treatment, extraction treatment or oxidizing treatment can be effective for obtaining uniform distribution of heat.

The present invention will be explained hereunder by examples. The examples never limit the scope of the present invention.

Example 1

Coal tar containing 2.0% by weight of free-carbon (QI) was heat treated at 450°C in a 20 liter autoclave under a practically inert atmosphere. The resulting heat-treated material was extracted with a tar middle oil (boiling point range = 120-250°C) and filtered. The residue of the extraction and filtration was uniformly heat-treated again in a batch-type rotary reactor of 2 liter capacity at 450°C under nitrogen stream of 2.0 liter/minute to obtain a carbonaceous powder. The carbonaceous powder was further pulverized and regulated to average particle size of 3.0$\mu$m with a pneumatic classifier. Content of ultrafine powder not larger than 1.59$\mu$m in particle size in the carbonaceous powder was 1.5% by weight. The particle size was measured with Coulter Counter using 50$\mu$m aperture tube.

C/H ratio of thus obtained carbonaceous powder was 2.39, and amounts of weight loss measured with a thermal gravimetric analyzer (TGA) under nitrogen stream at heating rate of 10°C/minute temperature rise were 3.5% by weight and 0.02% by weight in a temperature range of 400°C to 600°C and room temperature to 200°C respectively. Oxygen content based on elemental analysis was 0.65% by weight.

An electrorheological fluid was prepared by dispersing about 36% by weight of the carbonaceous powder uniformly into an electrical insulating oily medium of silicone oil having a viscosity of 0.01 Pa•s (0.1 poise) at room temperature. An electrical potential difference of DC 2kV/mm was applied to the electrorheological fluid at room temperature, and increase in viscosity of the fluid and value of electric current which flows through the fluid were measured to evaluate its capability as an electrorheological fluid. Similarly, increase in viscosity of the fluid at 120°C was measured to evaluate stability against the temperature. The measurement of the viscosity was conducted using a rotational viscometer with concentric cylinder (inner cylinder of 25mm radius and 20mm height; outer cylinder of 26mm radius) and apparent viscosity at shearing speed of 366/second was measured under application of the DC potential difference between the outer and inner cylinders.

The viscosity increase of the electrorheological fluid at room temperature was 0.6 Pa•s (6.0 poise) and the value of the electric current was 0.19mA. Almost the same electrorheological effect was obtained at 120°C.

From the above results, the electrorheological fluid was confirmed to be superior in the electrorheological effect and thermal stability.

Example 2

A carbonaceous powder was prepared in the same manner with Example 1 using coal tar containing no free-carbon (QI) as the raw material. The carbonaceous powder had average particle size of 3.0$\mu$m, content of ultrafine powder not larger than 1.59$\mu$m in particle size of 1.4% by weight, C/H ratio of 2.37, oxygen content of 0.68% by weight and amount of weight loss in a temperature range of 400°C to 600°C and room temperature to 200°C of 3.4% and 0.02% by weight respectively. Measurements of the particle size and the amount of weight loss with TGA were conducted similarly as Example 1.

The resulted carbonaceous powder was used to prepare an electrorheological fluid in the same manner with Example 1, and capability of the fluid was measured. Viscosity measurement method was the same with Example 1.

The viscosity increase of the electrorheological fluid at room temperature was 0.5 Pa•s (5.0 poise) and the value of the electric current was 0.03mA. Almost the same electrorheological effect was obtained at 120°C.

From these results, the electrorheological fluid was confirmed to be superior in the electrorheological effect and in thermal stability. Furthermore, the fluid had a characteristically smaller value of electric current against the viscosity change in comparison with Example 1. This phenomenon is reasoned to be due to the fact that the carbonaceous powder of Example 2 contains no free-carbon.

The measured values for the electrorheological fluid of Example 2 are shown in Figs. 1, 2, 3 and 4 with ● mark, together with the measured values for electrorheological fluids of Example 3 (O mark).

Example 3

Using the same coal tar employed in Example 2 as the raw material and controlling the heat treatment conditions and the second heat-treatment conditions in the same manner with Example 1, six kinds of carbonaceous powder having different degrees of carbonization (C/H ratio and amount of weight loss measured with TGA in a temperature range of 400°C to 600°C during heating the carbonaceous powder under nitrogen atmosphere from room temperature) were prepared. These carbonaceous powder had respectively almost the same regulated values of average particle size of about $3\mu$m, content of ultrafine powder not larger than $1.59\mu$m in particle size of 1.4-1.5% by weight, amount of weight loss measured with TGA during heating from room temperature to 200°C of below 0.02% by weight. The oxygen content of them was also regulated almost equal to 0.60-0.70% by weight. Measurements of the particle size and the amount of weight loss with TGA were conducted similarly as Example 1.

The resulted six kinds of carbonaceous powder were used to prepare electrorheological fluids in the same manner as Example 1, and capabilities of the fluids were measured.

The test results at room temperature of the electrorheological fluids in Example 3 are shown in Figs. 1, 2, 3 and 4 with O mark.

Fig.1 is a graph showing relationship between the C/H ratio [abscissa] of these carbonaceous powder and the value of electric current (mA) [ordinate] which flows through the electrorheological fluids using these carbonaceous powder under application of 2kV/mm electric potential difference. In the figure, the arrow sign (↔) indicates the range of C/H ratio specified in claim 1.

Fig.2 is a graph showing relationship between the C/H ratio [abscissa] of these carbonaceous powder and the increase in viscosity Pa•s (poise = P) [ordinate] of the electrorheological fluids using these carbonaceous powder under application of 2kV/mm electric potential difference, in which the arrow sign (↔) indicates the range of C/H ratios specified by Claim 1.

Fig.3 is a graph showing relationship between the amount of weight loss (wt%) [abscissa] of these carbonaceous powder measured with TGA in a temperature range of 400°C to 600°C during heating these carbonaceous powder under nitrogen atmosphere from room temperature and the value of electric current (mA) [ordinate] which flows through the electrorheological fluids using these carbonaceous powder under application of 2kV/mm electric potential difference. In the figure, the arrow sign (↔) indicates the range of weight loss specified in claim 1.

Fig.4 is a graph showing relationship between the amount of weight loss (wt%) [abscissa] of these carbonaceous powder measured with TGA in a temperature range of 400°C to 600°C during heating these carbonaceous powder under nitrogen atmosphere from room temperature and the increase in viscosity Pa•s (poise = P) of the electrorheological fluids using these carbonaceous powder under application of 2kV/mm electric potential difference [ordinate], in which the arrow sign (↔) indicates the range of weight loss specified by Claim 1.

From the results shown in Figs. 1, 2, 3 and 4, the capability of electrorheological fluid is confirmed to be dependent deeply on the C/H ratio of carbonaceous powder and the amount of weight loss measured with TGA in a temperature range of 400°C to 600°C during heating the carbonaceous powder under nitrogen atmosphere from room temperature. Further, it is recognized that the carbonaceous powder capable of providing an appropriate increase in viscosity and the value of electric current has the C/H ratio of 1.70-3.50 and the amount of weight loss measured with TGA in a temperature rang eof 400°C to 600°C during heating the carbonaceous powder under nitrogen atmosphere from room temperature of 0.5-13.0% by weight.

Comparative Example 1

To the electrical insulating oily medium of silicone oil having viscosity of 0.01 Pa•s (0.1 poise) at room temperature was added about 36% by weight of commercially available sodium polyacrylate fne powder containing 9.5% by weight of water known as dielectric material, and an electrorheological fluid was prepared. The capability of the conventional electrorheological fluid was evaluated in the same manner as Example 1.

As the result, it was found that the electrorheological fluid had the viscosity increase at room temperature of 0.43 Pa•s (4.3 poise) and the value of electric current of 0.04mA. However, at 120°C, the viscosity increase could not be measured because of an excessive value of electric current.

In contrast to the above, electrorheological fluids using carbonaceous powder according to the present invention showed far superior characteristics in the electrorheological effect and in the temperature stability when compared with the conventional electrorheological fluid.

Example 4

Using coal tar containing no free-carbon as the raw material and controlling the heat treatment conditions, the second heat-treatment conditions and classification conditions in the same manner with Example 1, was prepared a carbonaceous powder in which the amount of weight loss during heating from room temperature to 200°C was regulated to less than about 0.1% by weight. The C/H ratio was 2.38, and the amount of weight loss measured with TGA in a temperature range of 400°C to 600°C during heating the carbonaceous powder under nitrogen atmosphere from room temperature was 3.7% by weight.

The particle size was measured similarly as Example 1, and the particle size distribution measured is shown in Fig.5. In Fig.5, particle size of the carbonaceous powder is indicated on abscissa (μm) and the content is indicated on ordinate (% by weight).

An electrorheological fluid was prepared using the carbonaceous powder in the same manner as Example 1, and the property was measured. The test results at room temperature are shown in Table 1. Test results at 120°C showed the same electrorheological effect with that of at room temperature.

Example 5

Using coal tar containing no free-carbon used in Example 4 as the raw material and controlling the heat treatment conditions and the second heat treatment conditions in the same manner with Example 4, was prepared a carbonaceous powder. The carbonaceous powder was pulverized and classified similarly as Example 4 to regulate the particle size, and then the average particle size was regulated finally with a pneumatic classifier to make the content of ultrafine particle not larger than 1.59μm in particles size to be less than 5% by weight. The C/H ratio was 2.35.

Particle size distributions of the resulted carbonaceous powder is shown in Fig.6. In Fig.6, similar to Fig.5, the abscissa (μm) indicates particle sizes of the carbonaceous powder and the ordinate indicates their content (% by weight).

When the carbonaceous powder of Example 5 is compared with that of Example 4 (Fig.5), it is noticeable that the content of ultrafine powder not larger than 1.59μm in particle size is regulated to less than 5% by weight.

An electrorheological fluid was prepared in the same manner as Example 4, and it was evaluated by conducting capability test at room temperature. The result is shown in Table 1 together with that of Example 4.

Table 1

|  | Example 4 | Example 5 |
|---|---|---|
| C/H ratio | 2.38 | 2.35 |
| Component of low boiling point below 200°C (wt%) | 0.03 | 0.03 |
| Average particle size (μm) | 3.1 | 3.0 |
| Particles not larger than 1.59μm in particle size (wt%) | 6.3 | 2.0 |
| Viscosity increase Pa•s (poise) | 0.35(3.5) | 0.45(4.5) |
| Electric current (mA) | 0.05 | 0.02 |

From the result mentioned in Table 1, it is noticeable that electrorheological fluid using carbonaceous powder of Example 5 is, when compared with that using carbonaceous powder of Example 4, smaller in the value of electric current and superior in the electrorheological effect.

It has been confirmed from these results that carbonaceous powder superior in the electrorheological characteristics are obtained by containing no free-carbon and regulating the content of ultrafine powder not larger than 1.59$\mu$m in particle size to less than 5% by weight.

Example 6

Coal tar containing no free-carbon was heat-treated in a 20 liter autoclave at 450°C under a practically inert atmosphere. The resulting heat-treated material was extracted with a tar middle oil (boiling point range = 120-250°C) and filtered. The residue of the extraction and filtration was heat-treated again in a batch-type rotary reactor of 2 liter capacity at 450°C under nitrogen gas stream of 2.0 liter/minute to obtain a carbonaceous powder. The carbonaceous powder was further pulverized and was regulated to have an average particle size of 3.2$\mu$m with the use of a pneumatic classifier. The content of low boiling below 200°C component in the carbonaceous powder was regulated to less than 0.1% by weight. Then, the produce was heat-treated under oxygen atmosphere of controlled temperature and time to prepare a set of carbonaceous powder having different oxygen content. These carbonaceous powder thus obtained had a C/H ratio of 2.36 and the amount of weight loss measured with TGA in a temperature range of 400°C to 600°C during heating the carbonaceous powder under nitrogen atmosphere from room temperature was 3.6% by weight. The particle size was measured with Coulter Counter using 50$\mu$m aperture tube.

Using these carbonaceous powder, electrorheological fluids were prepared in the same manner as Example 1 to evaluate the capability. Results of capability test at room temperature for the resulting electrorheological fluids are indicated with O mark in Fig.7 and Fig.8.

In Fig.7, the abscissa indicates oxygen content in these carbonaceous powder (wt%) and the ordinate indicates value of electric current (mA) under application of 2kV/mm electric potential different to the electrorheological fluids using the carbonaceous powder. In Fig.8, the abscissa indicates oxygen content in these carbonaceous powder (wt%) and the ordinate indicates increase in viscosity Pa•s (poise) under application of 2kV/mm electric potential difference to the electrorheological fluids using these carbonaceous powder. Similar electrorheological effects were obtained in a test at 120°C.

From Fig.7 and Fig.8, it is noticeable that the value of electric current which flows through the fluid increases with the increase of oxygen content in carbonaceous powder. Accordingly, it is preferable to lower as much as possible the oxygen content in carbonaceous powder in consideration of the energy efficiency, and the oxygen content over 3.0% makes the value of electric current excessive to bring about troubles in practical uses.

Carbonaceous powder having different C/H ratio exhibited the same result as to the oxygen content.

Example 7

Coal tar containing no free-carbon (QI) was heat-treated in a 20 liter autoclave at 460°C under a practically inert atmosphere. The resulting heat-treated material was heat-treated again in a batch type rotary reactor of 2 liter capacity at 510°C under nitrogen gas stream of 5.0 liter/minute to obtain a carbonaceous powder. The carbonaceous powder was further pulverized with a jet mill and was regulated to have an average particle size of 3mm with the use of a pneumatic classifier. The particle size was measured with Coulter Counter using 50$\mu$m aperture tube. The carbonaceous powder thus obtained had the C/H ratio of 2.35 and the amount of weight loss measured with TGA during heating from room temperature to 200°C was 0.10% by weight. Since the carbonaceous powder melted in the rotary reactor and sticked on the inside wall of it, heat was not supplied uniformly to result in heterogeneity.

About 36% by weight of the carbonaceous powder was dispersed in the oily medium for electrorheological fluid of silicone oil having a viscosity of 0.01 Pa•s (0.1 poise) at room temperature to obtain an electrorheological fluid. The electrorheological fluid was evaluated in the same manner with Example 1. The viscosity increase at room temperature was 0.39 Pa•s (3.9 poise) and the value of electric current was 0.10mA. The electrorheological effect at 120°C was almost the same with that of at room temperature.

Example 8

Coal tar pitch obtained by treating coal tar containing no free-carbon at 400°C under reduced pressure was used as the raw material, and the material was extracted with a tar middle oil (boiling point range 120-250°C) and filtered, and the residue of the extraction and filtration was heat-treated similarly as Example 7 at 490°C under nitrogen gas stream of 2.0 liter/minute and then the particle size was regulated similarly as Example 7.

In the preparation of the carbonaceous powder, because of the adoption of the extraction step with the organic solvent, it was possible to prevent satisfactorily the melt-sticking during the heat treatment in comparison with Example 7.

Using the carbonaceous powder, an electrorheological fluid was prepared in the same manner as Example 1 to evaluated its capability. In Table 2 are shown test result at room temperature for thus obtained electrorheological fluid together with that of Example 7. The electrorheological effect at 120°C was almost the same with that of at room temperature.

From the result mentioned in Table 2, it is noticeable that the electrorheological fluid using the carbonaceous powder of Example 8 has superior characteristics of smaller value of electric current against increase in viscosity when compared with the electrorheological fluid using the carbonaceous powder of Example 7. This superiority is reasoned as based on the uniform production without melt-sticking in the rotary reactor.

Example 9

Coal tar employed in Example 7 was used as the raw material and the material was heat-treated at 460°C in a 20 liter autoclave under a practically inert atmosphere. The resulting heat-treated material was extracted with a tar middle oil and filtered. The residue of the extraction and filtration was heat-treated at 480°C with the rotary reactor used in Examples 7 and 8 under nitrogen gas stream of 2.0 liter/minute and regulated the average particle size to be about $3\mu$m. The particle size was measured similarly as Examples 7 and 8. The amount of weight loss measured with TGA of the carbonaceous powder during heating from room temperature to 200°C was about 0.10% by weight. In the production of the carbonaceous powder, no melt-sticking during the heat-treating step was observed.

An electrorheological fluid was prepared in the same manner as Example 1 using the carbonaceous powder and was evaluated. In Table 2 is shown test result at room temperature for thus obtained electrorheological fluid together with those of Examples 7 and 8. The electrorheological effect at 120°C was almost the same with that at room temperature.

Table 2

|  | Example 7 | Example 5 | Example 9 |
|---|---|---|---|
| C/H ratio | 2.35 | 2.35 | 2.34 |
| Component of low boiling point below 200°C (wt%) | 0.10 | 0.11 | 0.10 |
| Average particle size ($\mu$m) | 3.0 | 3.4 | 3.2 |
| Viscosity increase Pa•s (poise) | 0.39(3.9) | 0.43(4.3) | 0.45(4.5) |
| Electric current (mA) | 0.10 | 0.04 | 0.03 |
| Weight loss at 400-600°C (wt%) | 3.6 | 3.7 | 3.7 |

From the result mentioned in Table 2, it is noticeable that the electrorheological fluid using carbonaceous powder of instant Example 9 has a smaller value of electric current against increase in viscosity when compared with Example 8. Accordingly, the carbonaceous powder prepared uniformly by the present process has been confirmed to be a carbonaceous powder superior in the electrorheological effect.

Example 10

The carbonaceous powder obtained in Example 9 was heat-treated again at 400°C with the rotary reactor used in Example 7 under nitrogen gas stream of 2.0 liter/minute. The obtained carbonaceous powder had no detectable amount of weight loss measured with TGA under nitrogen stream during heating from room temperature to 200°C.

An electrorheological fluid was prepared in the same manner as Example 9 by using the carbonaceous powder, and was evaluated. The result showed the viscosity increase and the value of electric current to be almost the same with those of Example 9.

Example 11

By using coal tar pitch containing free-carbon of 0.0, 1.2, 2.0, 3.0, 3.3 and 4.6% by weight as the raw materials, and controlling the heat-treatment conditions, the second heat-treatment conditions and classification conditions in the same manner with Example 1 to regulate the C/H ratio and particle size, six kinds of carbonaceous powder having an average particle size of $3.0\mu$m were obtained. The yield of these carbonaceous powder from the pitch was 39-42% by weight.

These carbonaceous powder thus obtained had the C/H ratios of 2.37-2.39, the amounts of weight loss measured with TGA in a temperature range of 400°C to 600°C and room temperature to 200°C during heating the carbonaceous powder under nitrogen atmosphere were 3.4-3.6% by weight and 0.01-0.03% by weight respectively, the content of powder not larger than $1.59\mu$m in particle size were 1.2-1.6% by weight and the oxygen content by elemental analysis were 0.62-0.69% by weight. These carbonaceous powder had free-carbon content of 0.0, 3.0, 5.0, 7.5, 8.5 and 11.0% by weight respectively. Electrorheological fluids were prepared with these carbonaceous powder in the same manner as Example 1, and capabilities of them were evaluated

Test results at room temperature for thus obtained electrorheological fluids are shown with O mark in Fig.9 and Fig.10. In Fig.9, the abscissa indicates the free-carbon content in these carbonaceous powder (wt%) and the ordinate indicates the value of electric current (mA) under application of electric potential difference to the electrorheological fluids using these carbonaceous powder. In Fig.10, the abscissa indicates free-carbon content in these carbonaceous powder (wt%) and the ordinate indicates increase in viscosity Pa•s (poise) under application of electric potential difference to the electrorheological fluids using these carbonaceous powder. The electrorheological effects at 120°C were almost the same with those of at room temperature. From results shown in Fig.9 and Fig.10, it is recognized that the value of electric current in the fluid increases in accordance with increased content of free-carbon in these carbonaceous powder. Accordingly, content of free-carbon in carbonaceous powder are preferably minimized under consideration of the energy efficiency, and free-carbon content of above 10% by weight cause excessive amount of electric current to make them troublesome for practical uses.

In carbonaceous powder having different C/H ratio, effect of the free-carbon content was the same with that of Example 11.

Comparative Example 2

Free-carbon was extracted from coal tar pitch containing free-carbon by using a tar heavy oil (boiling point range = 270-350°C). The obtained free-carbon had a C/H ratio of 4.5 and the particle size was almost below $1.0\mu$m. The analysis of free carbon was conducted similarly as Example 1. An electrorheological fluid was prepared with the free-carbon in the same manner as Example 1, and the capability of the fluid was evaluated. The result at room temperature was the increase in viscosity of 0.09 Pa•s (0.9 poise) and the value of electric current of 1.41mA. From the result, it is clear that a electrorheological fluid using highly carbonized free-carbon tends to make the value of electric current excessive. Accordingly, an excessive content of free-carbon in carbonaceous powder causes excessive value of electric current in the fluid and deteriorates the capability.

**Claims**

1. A carbonaceous powder for electrorheological fluids which can be employed as dielectric fine-particles to be dispersed in an oily electric insulating medium, characterized in that said powder has a number ratio of carbon atoms to hydrogen atom (C/H) of 1.70-3.50 and a weight loss of 0.5-13.0% in the temperature range of from 400°C to 600°C when measured with a thermal gravimetric analyzer during heating of the carbonaceous powder under nitrogen atmosphere from room temperature at a temperature rise of 10°C/minute.

2. A carbonaceous powder for electrorheological fluid according to claim 1, in which the number ratio of carbon atom to hydrogen atoms (C/H) is 2.00-3.50 and the weight loss in the temperature range of from 400°C to 600°C is 0.5-6.0%.

3. A carbonaceous powder for electrorheological fluid according to claim 1, in which the carbonaceous powder has a weight loss of not more than 0.5% in the temperature range of from room temperature to 200°C when measured with a thermal gravimetric analyzer during heating of the carbonaceous powder under nitrogen atmosphere from room temperature at a temperature rise of 10°C/minute.

4. A carbonaceous powder for electrorheological fluid according to Claim 1, in which the carbonaceous powder has the maximum particle size of not larger than 50 $\mu$m.

5. A carbonaceous powder for electrorheological fluid according to Claim 1 or 3, in which the carbonaceous powder has the maximum particle size of not larger than 50 $\mu$m and an average particle size of 0.5-40 $\mu$m.

6. A carbonaceous powder for electrorheological fluid according to Claim 4 in which content of particles not larger than 1.59 $\mu$m in particle size is not more than 5% by weight.

7. A carbonaceous powder for electrorheological fluid according to Claim 1 or 3, in which the carbonaceous powder contains 0-10% by weight of free-carbon which is quinoline insoluble.

8. A carbonaceous powder for electrorheological fluid according to Claim 1 or 3, in which content of oxygen in the carbonaceous powder is not more than 3.0% by weight.

9. A method of making a carbonaceous powder for electrorheological fluid, which comprises providing an organic material selected from the group consisting of coal, coal tar, coal tar pitch, liquefied coal, coke, petroleum, petroleum tar and petroleum pitch as a raw material, heat-treating the raw material and pulverizing-classifying the heat-treated raw material, in which the heat treating is conducted in two heating steps whereby between the two heating steps a treatment step to prevent melting and sticking of the materials in the second heating step is effected.

10. A method of making a carbonaceous powder for electrorheological fluid according to Claim 9, in which said method further comprises a step for reducing free-carbon contained in the raw material tar or pitch.

11. A method of making a carbonaceous powder for electrorheological fluid according to Claim 9 or 10, in which said method employs as the raw material tar or pitch containing free-carbon of an amount specified by the formula;

$$\text{Free-carbon in tar or pitch (wt.\%)} \leq 10 \times \frac{\text{Yield of carbonaceous powder for electrorheological fluid from tar or pitch (wt.\%)}}{100}$$

12. A method of making a carbonaceous powder for electrorheological fluid according to Claim 9, in which free-carbon content in said powder is reduced to below 10% by weight by means of a powder-classifying treatment.

**Patentansprüche**

1. Kohlenstoffpulver für elektrorheologische Flüssigkeiten, die als dielektrische feine Teilchen in einem elektrisch isolierenden Ölmedium dispergiert verwendbar sind, dadurch gekennzeichnet,

daß das Pulver ein Zahlenverhältnis von Kohlenstoffatomen zu Wasserstoffatomen (C/H) von 1,70 bis 3,50 und einen Gewichtsverlust im Temperaturbereich von 400°C bis 600°C von 0,5 bis 13,0 % aufweist, bestimmt mit einem Thermogravimetrie-Analysegerät während der Erhitzung des Kohlenstoffpulvers unter Stickstoffatmosphäre von Raumtemperatur mit einer Temperaturerhöhung von 10°C pro Minute.

2. Kohlenstoffpulver für eine elektrorheologische Flüssigkeit nach Anspruch 1, wobei das Zahlenverhältnis der Kohlenstoffatome zu den Wasserstoffatomen (C/H) 2,00 bis 3,50 und der Gewichtsverlust im Temperaturbereich von 400°C bis 600°C 0,5 bis 6,0 % beträgt.

3. Kohlenstoffpulver für eine elektrorheologische Flüssigkeit nach Anspruch 1, wobei das Kohlenstoffpulver einen Gewichtsverlust von nicht mehr als 0,5 % im Temperaturbereich von Raumtemperatur bis 200 ° C aufweist, bestimmt mit einem Thermogravimetrie-Analysegerät während der Erhitzung des Kohlenstoffpulvers unter Stickstoffatmosphäre von Raumtemperatur mit einer Temperaturerhöhung von 10 ° C pro Minute.

4. Kohlenstoffpulver für eine elektrorheologische Flüssigkeit nach Anspruch 1, wobei das Kohlenstoffpulver die maximale Teilchengröße von nicht mehr als 50 $\mu$m aufweist.

5. Kohlenstoffpulver für eine elektrorheologische Flüssigkeit nach Anspruch 1 oder 3, wobei das Kohlenstoffpulver die maximale Teilchengröße von nicht mehr als 50 $\mu$m und eine mittlere Teilchengröße von 0,5 bis 40 $\mu$m aufweist.

6. Kohlenstoffpulver für eine elektrorheologische Flüssigkeit nach Anspruch 4, wobei der Gehalt an Teilchen von nicht größer als 1,59 $\mu$m Teilchengröße nicht über 5 Gewichtsprozent beträgt.

7. Kohlenstoffpulver für eine elektrorheologische Flüssigkeit nach Anspruch 1 oder 3, wobei das Kohlenstoffpulver 0 bis 10 Gewichtsprozent an freiem Kohlenstoff enthält, der in Chinolin unlöslich ist.

8. Kohlenstoffpulver für eine elektrorheologische Flüssigkeit nach Anspruch 1 oder 3, wobei der Gehalt an Sauerstoff im Kohlenstoffpulver nicht mehr als 3,0 Gewichtsprozent beträgt.

9. Verfahren zur Herstellung eines Kohlenstoffpulvers für eine elektrorheologische Flüssigkeit, umfassend die Bereitstellung eines organischen Materials, ausgewählt aus der Gruppe, bestehend aus Kohle, Kohlenteer, Kohlenteerpech, verflüssigter Kohle, Koks, Erdöl, Erdölteer und Erdölpech als Ausgangsmaterial, Hitzebehandlung des Ausgangsmaterials und Pulverisierung-Klassifizierung des hitzebehandelten Ausgangsmaterials, wobei die Hitzebehandlung in zwei Erhitzungsschritten durchgeführt wird, wobei zwischen den zwei Erhitzungsschritten ein Behandlungsschritt durchgeführt wird, um das Schmelzen und Aneinanderhaften der Materialien im zweiten Erhitzungsschritt zu verhindern.

10. Verfahren zur Herstellung eines Kohlenstoffpulvers für eine elektrorheologische Flüssigkeit nach Anspruch 9, wobei das Verfahren weiterhin einen Reduktionsschritt von freiem, im Ausgangsmaterial Teer oder Pech enthaltenem Kohlenstoff umfaßt.

11. Verfahren zur Herstellung eines Kohlenstoffpulvers für eine elektrorheologische Flüssigkeit nach Anspruch 9 oder 10, wobei das Verfahren als Ausgangsmaterial Teer oder Pech mit einem Gehalt an freiem Kohlenstoff entsprechend der nachfolgenden Formel aufweist:

```
                                    Ausbeute an Kohlen-
                                    stoffpulver für eine
                                    elektrorheologische
                                    Flüssigkeit aus Teer
                                    oder Pech (Gewichts-
freier Kohlenstoff im Teer          prozent)
oder Pech (Gewichtsprozent) < 10 x  ---------------------
                                              100
```

12. Verfahren zur Herstellung eines Kohlenstoffpulvers für eine elektrorheologische Flüssigkeit nach Anspruch 9, wobei der Gehalt an freiem Kohlenstoff im Pulver auf unter 10 Gewichtsprozent durch eine Pulver-Klassifizierungsbehandlung verringert wird.

**Revendications**

1. Une poudre carbonée pour fluides électrorhéologiques qui peut être utilisée comme fines particules diélectriques à disperser dans un milieu huileux électriquement isolant caractérisée en ce que ladite poudre présente un rapport en nombre des atomes de carbone aux atomes d'hydrogène (C/H) compris entre 1,70 et 3,50, et une perte de poids de 0,5 à 13,0 % dans l'intervalle de température de 400°C à 600°C telle que mesurée avec un analyseur thermogravimétrique pendant le chauffage de la poudre carbonée sous atmosphère d'azote à partir de la température ambiante à une vitesse d'élévation de température de 10°C/minute.

2. Une poudre carbonée pour fluide électrorhéologique selon la revendication 1, dans laquelle le rapport en nombre des atomes de carbone aux atomes d'hydrogène (C/H) est compris entre 2,00 et 3,50, et la perte de poids dans l'intervalle de température de 400°C à 600°C est de 0,5 à 6,0 %.

3. Une poudre carbonée pour fluide électrorhéologique selon la revendication 1, dans laquelle la poudre carbonée présente une perte de poids d'au plus 0,5 % dans l'intervalle de température allant de la température ambiante à 200°C telle que mesurée avec un analyseur thermogravimétrique pendant le chauffage de la poudre carbonée sous atmosphère d'azote à partir de la température ambiante à une vitesse d'élévation de température de 10°C/minute.

4. Une poudre carbonée pour fluide électrorhéologique selon la revendication 1, dans laquelle la poudre carbonée a une taille maximale de particules d'au plus 50 $\mu$m.

5. Une poudre carbonée pour fluide électrorhéologique selon la revendication 1 ou 3, dans laquelle la poudre carbonée a une taille maximale de particules d'au plus 50 $\mu$m et une taille moyenne de particules de 0,5 à 40 $\mu$m.

6. Une poudre carbonée pour fluide électrorhéologique selon la revendication 4, dans laquelle la proportion de particules dont la taille est d'au plus 1,59 $\mu$m ne dépasse pas 5 % en poids.

7. Une poudre carbonée pour fluide électrorhéologique selon la revendication 1 ou 3, dans laquelle la poudre carbonée contient 0 à 10 % en poids de carbone libre qui est insoluble dans la quinoléine.

8. Une poudre carbonée pour fluide électrorhéologique selon la revendication 1 ou 3, dans laquelle la teneur en oxygène de la poudre carbonée n'est pas supérieure à 3,0 % en poids.

9. Un procédé de fabrication d'une poudre carbonée pour fluide électrorhéologique qui comprend les étapes consistant à fournir une matière organique choisie dans le groupe formé par la houille, le goudron de houille, le brai de goudron de houille, la houille liquéfiée, le coke, le pétrole, le goudron de pétrole et le brai de pétrole comme matière première, à traiter thermiquement la matière première et à pulvériser- classifier matière première traitée thermiquement, dans lequel le traitement thermique est conduit en deux étapes de chauffage en effectuant entre les deux étapes de chauffage une étape de traitement pour empêcher les matières de fondre et de coller dans la seconde étape de chauffage.

10. Un procédé de fabrication d'une poudre carbonée pour fluide électrorhéologique selon la revendication 9, dans lequel ledit procédé comprend de plus une étape de réduction du carbone libre contenu dans le goudron ou le brai constituant la matière première.

11. Un procédé de fabrication d'une poudre carbonée pour fluide électrorhéologique selon la revendication 9 ou 10, lequel procédé utilise comme matière première un goudron ou un brai contenant du carbone libre en une quantité spécifiée par la formule :

$$\text{Carbone libre dans le goudron ou brai (\% en poids)} \leq 10 \times \frac{\text{Rendement en poudre carbonée pour fluide électrorhéologique par rapport au goudron ou brai (\% en poids)}}{100}$$

12. Un procédé de fabrication d'une poudre carbonée pour fluide électrorhéologique selon là revendication 9, dans lequel la teneur en carbone libre de ladite poudre est réduite à moins de 10 % en poids par un traitement de classification de poudre.

# F I G. 1

# F I G. 2

# F I G. 3

# F I G. 4

# FIG. 5

# FIG. 6

# FIG. 7

# FIG. 8

# FIG. 9

# FIG. 10